# EUROPÄISCHE PATENTSCHRIFT

(11) **EP 2 761 195 B1**
(45) Veröffentlichungstag und Bekanntmachung des Hinweises auf die Patenterteilung: **11.01.2017**
(21) Anmeldenummer: 12756425.0
(22) Anmeldetag: 31.08.2012
(51) Int. Cl.: F16C 17/04, F16C 33/10, F16C 33/20, F16C 33/04, F16C 33/06

(54) **HYDRODYNAMISCHES AXIALLAGER**
HYDRODYNAMIC AXIAL BEARING
PALIER AXIAL HYDRODYNAMIQUE

(30) Priorität: 26.09.2011 DE 102011114413
(43) Veröffentlichungstag der Anmeldung: 06.08.2014
(73) Patentinhaber: 3M Innovative Properties Company, St. Paul, MN 55133-3427 (US)
(72) Erfinder: KAYSER, Armin, 87474 Buchenberg (DE); KAYSER, Ursula, 87474 Buchenberg (DE); SCHONHOVEN, Dietmar, 87437 Kempten (DE); ZIMMERMANN, Johanna, 23552 Lübeck (DE)
(74) Vertreter: Mössner, Brigitte
(86) Internationale Anmeldenummer: PCT/EP2012/066950
(87) Internationale Veröffentlichungsnummer: WO 2013/045202

(56) Entgegenhaltungen:
- EP-A2- 1 717 469
- WO-A2-2007/081639
- DE-A1- 1 957 058
- DE-A1-102004 051 398
- DE-A1-102009 031 760
- JP-A- 2004 293 684
- JP-A- 2006 183 702
- US-A- 5 829 338
- US-A1- 2006 034 556

## Beschreibung

### Technisches Gebiet

Die vorliegende Erfindung betrifft ein mediengeschmiertes hydrodynamisches Axiallager, das sehr geringe Reibleistungsverluste erzeugt sowie für hohe Laufleistungen geeignet ist und das aus Polymerwerkstoffen hergestellt werden kann.

### Hintergrund der Erfindung

Mediengeschmierte Axiallager werden beispielsweise zur Wellenlagerung in dichtungslosen magnetgekuppelten Pumpenantrieben eingesetzt und nehmen dort die Schubkräfte aus dem Pumpenlaufrad auf. Bei diesem Pumpentyp wird das Medium statisch abgedichtet durch den sogenannten Spalttopf. Somit entfällt eine dynamische Wellendichtung. Der Antrieb der Pumpenwelle erfolgt über eine Magnetkupplung, d.h. über ein durch den Spalttopf wirkendes Magnetfeld vom aussenliegenden Antrieb auf die innenliegende Pumpenwelle. Dieser Pumpentyp erfüllt höchste Anforderungen an Lebensdauer, Leckagefreiheit und Energie-Effizienz und findet zunehmend für Hocheffizienz-Umwälzpumpen Anwendung.

Reibwertverluste entstehen bei diesem Pumpentyp nur noch an den beiden Radiallagern und in höherem Maße am axialen Schublager, das gleichzeitig den Pumpendifferenzdruck abstützen muss. Die systembedingten Reibwertverluste am axialen Schublager haben deshalb den höchsten Anteil an der Verlustleistung speziell bei Pumpen kleiner Leistungsklassen und hoher Drehzahl.

### Stand der Technik

In heutigen Pumpentypen mit mediengeschmierten Axial-Schublagern wird in den meisten Konstruktionen eine Gleit-/Gegenring-Paarung aus der Werkstoffkombination Grafit gegen Aluminiumoxid eingesetzt. Mit diesen Paarungen können hohe Laufleistungen von über 10 Jahren im Dauerbetrieb erzielt werden, bei Reibwerten von etwa 0,05.

Für energiesparende Hocheffizienz-Pumpen sind diese Reibwerte jedoch zu hoch und würden bedeuten, dass bis zu 30% der Pumpenleistung als Reibverlust verloren gehen können. Zudem sind die Kosten dieser Lagerpaarungen für Massenanwendungen zu hoch, denn bei den beiden eingesetzten Werkstoffen Grafit und Keramik handelt es sich um Sinterwerkstoffe, die über die Verfahrensschritte Formgebung und einen Temperaturprozess hergestellt werden müssen. Wenigstens eine der Lagerflächen muss zudem geläppt oder poliert werden um die Funktionalität des Lagers zu gewährleisten. Darüber hinaus läuft diese Werkstoffpaarung ohne hydrodynamische Konstruktion aufgrund des sehr hohen E-Moduls der Keramik und auch der eingesetzten Grafitwerkstoffe nicht geräuschfrei, wie es in einigen Anwendungen erforderlich ist. Typische Grafitwerkstoffe weisen einen E-Modul von 27 GPa, Sinterkeramiken von 400 GPa auf.

Zur Optimierung der tribologischen Bedingungen und zur Vermeidung von Trockenlauf werden axiale Gleitlager in konventionellen Ausführungen mit zwei oder mehr Schmiernuten versehen. Auch mit diesen Konstruktionen werden unabhängig vom Werkstoff Reibwerte von 0,05 nicht unterschritten.

Weiterhin ist bekannt, dass Axiallager durch ein hydrodynamisches Design tribologisch optimiert werden können. Dies wird auch bei Grafit/Keramik-Lagerpaarungen bereits in neuen Pumpenkonstruktionen umgesetzt. Mit Feinstrukturierungen in der Lauffläche können niedrige Reibwerte bis 0,01 erzielt werden. Als Feinstrukturierungen sind dabei insbesondere der Keilspalt (ebener schräger Schmierkeil) und der Keilspalt mit Rastfläche von Bedeutung. Ein Nachteil dieser Lösung ist jedoch, dass sich die eingesetzten hydrodynamischen Feinstrukturierungen über die Lebensdauer abnutzen sowie eine längere Einlaufzeit zur Erzielung eines niedrigen Reibwertes notwendig ist. Weiterhin nachteilig bei dieser Lösung sind hohe Schwankungen des Reibwertes über die Lebensdauer und innerhalb von Fertigungsserien.

Weiterhin ist bekannt, dass stufenförmige Schmierspalte eine höhere Tragkraft haben können als der Keilspalt, wenn man eine unendliche Breite annimmt. Bei endlicher Breite des Schmierspalts schrumpft jedoch dieser theoretische Vorteil vollkommen zusammen, weil der höchste Druck an der Stufe auftritt, wo der Schmiermittelabflussquerschnitt (Seitenfluss) groß ist, so dass ein solches Lager bei kleinen Breitenverhältnissen sogar schlechter als ein Kippsegmentlager wird (G. Rothley, Überblick über theoretische und experimentelle Ergebnisse dynamischer Radial- und Axiallager im laminaren und turbulenten Bereich, Literaturstudie, Kernforschungszentrum Karlsruhe, 1969, S. 78). Bei Hamrock et al. (Fundamentals of Fluid Film Lubrication, 2004, S. 229) heißt es bezüglich des stufenförmigen Schmierspalts: "This bearing has not, however, enjoyed the same development and applications as the pivoted-pad slider bearing (Kippsegmentlager). Past neglect of this mathematically preferable configuration has be due to doubts about the relative merits of this bearing when side leakage is considered."

Polymerbasierte Werkstoffe haben bislang noch keine breite Verwendung in mediengeschmierten Pumpenlagern gefunden, obwohl insbesondere aus Kostengründen der Anteil von Polymerwerkstoffen in Pumpenbauteilen mit jeder neuen Pumpengeneration ansteigt. Die werkstoffbedingten Nachteile sind die schlechte Wärmeableitung (< 1.0 W/m*K), die geringe Formstabilität unter Druckbelastung und die nicht ausreichende Verschleißbeständigkeit. Ein wesentlicher Grund, Polymerwerkstoffe nicht als Lagerwerkstoff einzusetzen, sind die hohen Drehzahlen von ca. 3000 U/min, die sich aus der Netzfrequenz von 50 bzw. 60 Hz ergeben. Dadurch bedingt entstehen hohe Reibwärmeleistungen, die von Polymerwerkstoffen nur sehr schlecht abgeleitet werden. Zudem versagen die Polymerwerkstoffe schon bei vergleichsweise geringen Temperaturen mechanisch, bedingt durch Ihre vergleichsweise niedrigen Glasübergangstemperaturen. Umwälzpumpen werden zudem oft in Druckwassersystemen bis etwa 140°C betrieben. Bei diesen Bedingungen versagen viele konventionelle Polymerwerkstoffe durch Hydrolyse und/oder Verlust der mechanischen Festigkeit.

In der WO 2009/135120 A2, der US 5,567,057 und der US 2004/0057642 A1 sind Konstruktionsweisen für Axiallager-Anordnungen aus metallischen Konstruktionswerkstoffen beschrieben. Bei diesen Lösungen ist der Gleitring nicht einteilig ausgeführt, sondern aus mehreren Einzelteilen mit Segmenten aufgebaut. Die WO 2009/135120 A2 beschreibt eine Lösung mit Pellet-Segmenten, die US 5,567,057 beschreibt eine Lösung mit sogenannten Kipp-Segmenten, und die US 2004/0057642 A1 beschreibt eine weitere Segment-Lösung. Diese Konstruktionen sind für hohe Belastungen und Wellenabmessungen geeignet und erlauben auch bei Einsatz von Polymerwerkstoffen ein hydrodynamisches Laufverhalten, sind aber für Pumpen kleiner Wellendurchmesser von weniger als etwa 20 mm aufgrund des geringen zur Verfügung stehenden Bauraums und des erheblichen konstruktiven Aufwands nicht realisierbar.

Die US 2006/0034556 A1 beschreibt eine Axiallagerkonstruktion aus metallischen Werkstoffen mit hydrodynamischer Strukturierung über eine gewellte Oberfläche. Nachteil dieser Lösung ist, dass sie keine über die Lebensdauer stabil niedrigen Reibwerte bei Ausführung in Grafit oder Polymerwerkstoffen erlaubt. Schon bei geringem Verschleiß an den konkaven Spitzen verändert sich der hydrodynamische Effekt und kann schon bei Abtrag von wenigen Hundertstel Millimetern in normale Mischreibung übergehen.

In der WO 2007/081639 A2 und der WO 2006/083756 A2 wird eine Axiallagerkonstruktion vorgeschlagen, die auch für Polymerwerkstoffe geeignet ist und auch bei Verschleiß am Polymer-Gleitring einen stabilen hydrodynamischen Effekt ermöglicht. Dabei sind unter der Gleitoberfläche des Lagerrings Taschen eingearbeitet. Die im unbelasteten Zustand ebene Lauffläche des Gleitringes bildet unter Druck durch elastische Verformung in Richtung der Taschen eine Wellenform aus, wodurch der Aufbau eines hydrodynamischen Gleitfilmes begünstigt wird. Aus geometrischen Gründen ist diese Ausführung aber nur für große Wellendurchmesser geeignet. Bei kleinen Wellendurchmessern reicht die elastische Verformbarkeit von Polymerwerkstoffen nicht aus, um die für die Funktion notwendige Wellenform aufzubauen. Diese Lagertechnik kann deshalb nur bei größeren Pumpen zum Einsatz kommen, mit Wellendurchmessern von größer als etwa 30 mm. Zudem ist die Herstellung der sehr komplexen Taschenformen fertigungstechnisch sehr aufwändig und nur für Kleinserien und Sonderpumpen geeignet.

In der DE19719858 A1 werden Rezepturen für Harzmassen mit tribologisch wirksamen Füllstoffen für die Anwendung als Beschichtung von Axiallagern vorgeschlagen, allerdings ohne eine geeignete konstruktive Ausführung der Axiallager zur Stabilisierung des hydrodynamischen Gleitfilms zu beschreiben. Mit den hier verwendeten ebenen Probekörpern werden Reibwerte von 0,05 erreicht. Die bei diesen Reibwerten entstehende Reibleistung und Reibwärme erlaubt den Einsatz von Polymergleitlagern in höher beanspruchten Pumpenlagern nicht.

Die WO 97/26462 beschreibt eine Ausführungsform für ein kombiniertes Axial-/Radiallager aus einem Hochleistungs-Polymerwerkstoff, vorzugsweise aus dem Sinterkunststoff Polyimid. Mit der vorgeschlagenen axial ebenen Konstruktion ist jedoch der Aufbau eines stabilen hydrodynamischen Gleitfilms am Axiallager nicht möglich. Auch bei dieser Lagerkonstruktion ist aufgrund der entstehenden Reibleistung und Reibwärme der Einsatz von Polymergleitlagern in höher beanspruchten Pumpenlagern nicht möglich.

Die DE 10 2004 051 398 A1 offenbart die Merkmale des Oberbegriffs des Anspruchs 1.

### Aufgabe der Erfindung

Der Erfindung liegt daher die Aufgabe zugrunde, unter Vermeidung der Nachteile des Standes der Technik ein hydrodynamisches Axiallager zur Verfügung zu stellen, das reibverlustarm und verschleißfest auch über lange Laufzeiten ist, und das auch für die Herstellung aus Polymerwerkstoffen geeignet ist und das konstruktiv einfach in Form eines einteiligen Lagers aufgebaut ist, welches insbesondere auch für kleinere bis mittlere Wellendurchmesser bis 20 mm geeignet ist.

### Zusammenfassung der Erfindung

Die oben genannte Aufgabe wird gelöst durch ein Axiallager umfassend einen Gleitring, einen Gegenring und eine elastische Lagerung des Gleitringes gemäß Anspruch 1. Bevorzugte bzw. besonders zweckmäßige Ausführungsformen des erfindungsgemäßen Axiallagers sind in den Unteransprüchen 2-20 angegeben.

Gegenstand der Erfindung ist somit ein Axiallager, umfassend einen Gleitring, einen Gegenring und eine elastische Lagerung des Gleitringes, wobei der Gleitring einteilig ist und an seiner Lauffläche eine Strukturierung aufweist, die den Aufbau eines stabilen hydrodynamischen Gleitfilmes ermöglicht, und wobei die Strukturierung der Lauffläche in der Weise erfolgt, dass die Lauffläche drei oder mehrere Erhöhungen aufweist, deren Kontaktfläche zum Gegenring eben ist, wobei die gesamte Kontaktfläche der Erhöhungen der Lauffläche höchstens 50%, vorzugsweise höchstens 30% und insbesondere bevorzugt höchstens 20% der in eine zur Kontaktfläche parallelen Ebene projizierten Lauffläche beträgt, und wobei mindestens ein Lagerring der Gleitring/Gegenring-Paarung aus einem Polymerwerkstoff zusätzliche Hartstoffpartikel umfasst, und wobei der Gehalt an Hartstoffen zwischen 1-30 Gew.-% beträgt.

Das erfindungsgemäße Axiallager ermöglicht den stabilen Aufbau eines hydrodynamischen Gleitfilmes und zeichnet sich durch sehr niedrige Reibverluste und geringen Verschleiß aus.

Ein weiterer Vorteil des erfindungsgemäßen Axiallagers ist die Einsatzmöglichkeit von kostengünstig herstellbaren Polymer-Lagerwerkstoffen. Die Lagerkonstruktion erlaubt damit den Ersatz der bisher in Pumpenanwendungen als Standard verwendeten Sinter-Grafitwerkstoffe. Dadurch wird erstmalig der Einsatz von Polymerwerkstoffen für Axiallager in hoch belasteten Pumpen mit kleinen Wellendurchmessern bis etwa 20 mm möglich. Bei diesen Pumpenkonstruktionen können Polymer-Segmentlager und andere im Stand der Technik bekannten Sonderkonstruktionen aufgrund des hohen Bauraumbedarfes nicht eingesetzt werden.

Ein weiterer Vorteil besteht in der einfachen und kompakten Bauweise als Einscheiben-Axiallager (d.h. Axiallager mit einteiligem Aufbau des Gleitrings), wodurch eine wirtschaftliche, konstruktiv einfache und kompakte Lösung gefunden wurde, die auch bei größeren Pumpen bisherige aufwändige Konstruktionen wie beispielsweise Segmentlager und teure Tribo-Werkstoffe wie Sinterkeramik und Grafit vorteilhaft ersetzen kann.

Die Reibverlustleistung des erfindungsgemäßen Axiallagers ist gegenüber konventionellen Axiallagern aus Grafit oder Sinterkeramik mit ebenen oder mit Schmiernuten versehenen Gleitringen gemäß Stand der Technik um mindestens den Faktor 5 reduziert. Mit dem erfindungsgemäßen Axiallager können Reibwerte von unter 0,01 erhalten werden, während mit konventionellen Axiallagern aus Grafit oder Sinterkeramik die erzielbaren Reibwerte bei 0,05 oder höher liegen.

Damit können mit dem erfindungsgemäßen Axiallager erstmals Reibungskoeffizienten (Reibwerte) von deutlich unter 0,05 und sogar unter 0,01 für hochbeanspruchte Pumpenlager mit kleinen Wellendurchmessern bis etwa 20 mm erhalten werden, während für Axiallager mit großen Wellendurchmessern, bei denen Reibungskoeffizienten um 0,01 bisher nur mit großem konstruktiven Aufwand wie beispielsweise mit Segmentlagern möglich waren, die sehr niedrigen Reibungskoeffizienten von 0,01 und darunter mit einem erheblich reduzierten konstruktiven Aufwand in Form eines Einscheiben-Axiallagers realisiert werden können.

Die Reibwärmeleistung ist beim erfindungsgemäßen Axiallager gegenüber konventionellen Axiallagern aus Grafit oder Sinterkeramik mit ebenen oder mit Schmiernuten versehenen Gleitringen gemäß Stand der Technik ebenfalls um den Faktor 5 reduziert. Damit ist ein hohes Wärmeableitungsvermögen der Gleitringe nicht mehr zwingend erforderlich und die Überschreitung der Glastemperatur von Polymerwerkstoffen wird vermieden. Dies stellt eine notwendige Voraussetzung zum erfolgreichen Einsatz der Polymerwerkstoffe für die beschriebenen Lager dar.

Die Reibverlustleistung des erfindungsgemäßen Axiallagers ist gegenüber Axiallagern mit hydrodynamischem Keilspalt wesentlich reduziert und für hohe Laufleistungen stabilisiert. Mit hydrodynamischem Keilspalt wurden bei eigenen Versuchen mit Polymerwerkstoffen und Grafit fallweise bereits Reibungskoeffizienten von 0,01-0,02 erzielt, die jedoch nicht über hohe Laufzeiten stabil sind. Durch die erfindungsgemäße Strukturierung des Gleitrings des Axiallagers konnten überraschenderweise Reibungskoeffizienten deutlich unter 0,01 erzielt werden, die eine auch über die Lebensdauer sehr stabile Optimierung der Reibverhältnisse erlaubt.

Der stufenförmige Schmierspalt war zwar als theoretische Möglichkeit einer hydrodynamischen Strukturierung im Stand der Technik bekannt, jedoch war nicht zu erwarten, dass er sich als vorteilhaft im Hinblick auf die Erzielung niedrigster Reibungskoeffizienten im Vergleich zu Keilspalt-Strukturen erweisen würde, da das technische Vorurteil bestand, dass der stufenförmige Schmierspalt bei Berücksichtigung des Seitenflusses (side leakage) nachteilig wäre.

Weiterhin war zu erwarten, dass die hohe Flächenpressung bei der niedrigen Kontaktfläche des Gleitrings für Polymerwerkstoffe mit vergleichsweise niedrigem E-Modul und Verschleisswiderstand zu sehr hohen Verschleissraten führen würde, was überraschenderweise nicht der Fall ist.

Bei der erfindungsgemäßen hydrodynamischen Strukturierung des Gleitrings wird das Konzept der Schmiertaschen, also von Vertiefungen in der Kontaktfläche, ganz aufgegeben. Vielmehr hat der Gleitring des erfindungsgemäßen Axiallagers nur wenige Erhöhungen (drei oder mehrere, vorzugsweise nur drei). Durch die Reduzierung der Kontaktfläche auf vorzugsweise maximal 50% der projizierten Lauffläche kann überraschenderweise bei Polymerwerkstoffen ein sehr stabiler hydrodynamischer Gleitfilm erzeugt werden.

In vergleichenden Untersuchungen hat sich gezeigt, dass durch die erfindungsgemäße hydrodynamische Strukturierung sehr niedrige Reibungskoeffizienten mit hoher statistischer und Lebensdauerstabilität erzielt werden können. Diese stabil sehr niedrigen Reibungskoeffizienten können mit konventionellen hydrodynamischen Strukturen wie im Stand der Technik bekannt nicht erzielt werden. Dies gilt auch für konventionelle Lagerwerkstoffe wie beispielsweise Grafit oder Keramik.

Ein entscheidender Vorteil dieses Designs bei einteiligen Lagerringen von kleiner Abmessung ist zudem, dass die Stufenhöhe aus geometrischen Gründen vergleichsweise hoch ausgeführt werden kann. So können beispielsweise Stufenhöhen von 0,5 mm verwirklicht werden, während bei Keil/Rastfläche-Strukturen bei kleinen Lagerringen nur Stufenhöhen von ca. 0,05 mm möglich sind. Dies resultiert aus den für die Funktion von Keilflächen notwendigen kleinen Keilwinkeln.

Es konnte gezeigt werden, dass über einen breiten Bereich der Stufenhöhe der Erhöhungen bei der erfindungsgemäßen Strukturierung der Lauffläche des Gleitrings geringste Reibungskoeffizienten resultieren. Somit kann diese Strukturierung der Lauffläche des Gleitrings über die Lebensdauer erheblichen Verschleiß im Bereich von mehreren Zehntel Millimetern tolerieren, während alternative Ausführungen mit geringer Stufenhöhe wie beispielsweise Keil/Rastfläche-Strukturen nur wenige Hundertstel Millimeter tolerieren können.

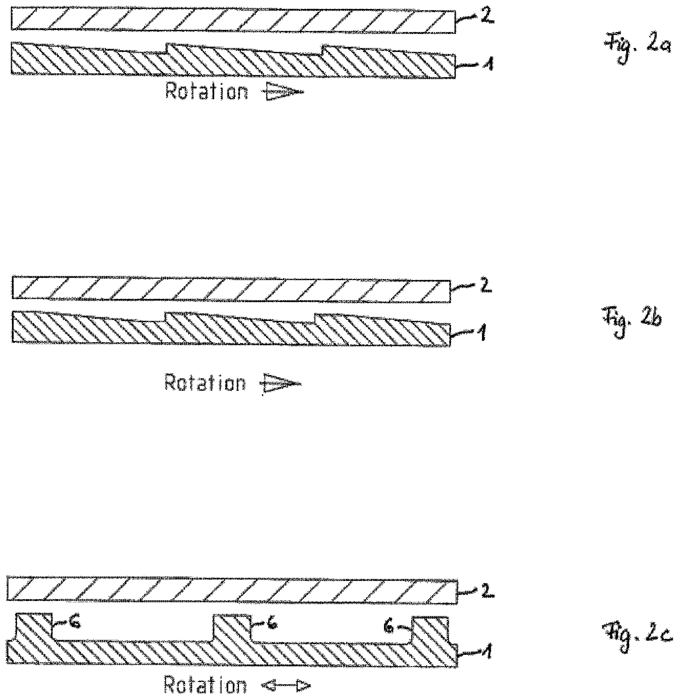

Die beschriebene Konstruktion hat gegenüber Axiallagern mit hydrodynamischen Keilspalt-Strukturen auch den Vorteil der bidirektionalen Wirkung (siehe Figur 2). Prinzipiell ist das zwar auch mit gegenläufigen Keilspaltlösungen möglich, erfordert aber eine wesentlich höhere Umfangslänge, die bei kleinen Wellendurchmessern nicht zur Verfügung steht.

Das erfindungsgemäße Axiallager zeichnet sich durch sehr stabile Reibungskoeffizienten von deutlich unter 0,01 bereits nach sehr kurzer Einlaufzeit von wenigen Minuten aus. Konventionelle Tribopaarungen erfordern Einlaufzeiten von mehreren Stunden.

Ein weiterer Vorteil des erfindungsgemäßen Axiallagers ist, dass bei Einsatz von Polymerwerkstoffen für den Gleit- oder Gegenring aufgrund des geringen E-Moduls und des hydrodynamisch erzeugten Gleitfilmes nur minimale Laufgeräusche entstehen. Unter Testbedingungen laufen diese Paarungen verschleißfrei und extrem laufruhig.

Das erfindungsgemäße Axiallager ermöglicht den Einsatz von Axiallager-Ringen aus polymerbasierten Werkstoffen, insbesondere in Pumpen kleiner bis mittlerer Wellendurchmesser. Die Axiallager in diesen Pumpentypen werden bisher vornehmlich aus Sinterkeramik, Hartmetall oder Grafit gefertigt.

Durch die Herstellung der erfindungsgemäßen Lagerringe aus Polymerwerkstoffen über das thermoplastische Spritzgussverfahren ohne mechanische Nachbearbeitung können kostenintensive Herstellprozesse vermieden werden. Insbesondere thermische Prozesse und mechanische Bearbeitung führen bei konventionellen Lagerwerkstoffen zu hohen Herstellkosten.

Die vorzugsweise Verstärkung der Polymerwerkstoffe durch geeignete keramische Füllstoffe erlaubt auch unter kritischen Randbedingungen wie abrasiven Partikeln im Medium oder hoher Rauhigkeit der Gegenlauffläche eine signifikante Reduzierung des Materialabtrages durch Verschleiß und erhöht somit die Lebensdauer der Lager.

Überraschenderweise konnte dabei aufgezeigt werden, dass durch die Kombination des werkstoffgerechten Designs der Lageranordnung, der Auswahl von geeigneten Basispolymerwerkstoffen und ggf. darauf abgestimmter Verstärkungsstoffe sowie der Oberflächenbearbeitung des Gegenringes die tribologischen Kennwerte von Grafitlagern nicht nur erreicht, sondern insbesondere in Bezug auf Reibungskoeffizient, Verschleiß und Stabilität des Reibverhaltens deutlich übertroffen werden konnten.

### Kurze Beschreibung der Zeichnungen

Die Erfindung wird anhand der Zeichnungen näher erläutert. Hierbei zeigen
**Figur 1a** und **Figur 1b** eine perspektivische Ansicht einer Lageranordnung gemäß Stand der Technik zur axialen Lagerung von Antriebswellen;
**Figuren 2a-2c** den Vergleich von hydrodynamischen Strukturen als Schnitt-Abwicklung des Gleitrings 1, wobei die Figuren 2a und 2b den Stand der Technik und Figur 2c die Erfindung repräsentieren;
**Figuren 3a-3c** eine Schnitt-Abwicklung des Gleitrings 1, wobei die Figuren 3a und 3b den Stand der Technik und die Figur 3c die Erfindung repräsentieren;
**Figuren 4a** und **4b** in perspektivischer Ansicht die Anordnung der Erhöhungen auf einem erfindungsgemäßen Gleitring;
**Figuren 5a-5c** in perspektivischer Ansicht verschiedene mögliche Formen der Erhöhungen bzw. der Kontaktflächen eines erfindungsgemäßen Gleitringes;
**Figur 6** eine Schnittansicht der elastischen Lagerung eines erfindungsgemäßen Gleitringes;
**Figuren 7a-7c** eine bevorzugte Ausführungsform eines erfindungsgemäßen Gleitringes;
**Figuren 8a** und **8b** die Aufsicht des in den Figuren 7a-7c gezeigten Gleitringes; und
**Figur 9** den zeitlichen Verlauf der Reibwertmessung für Beispiel 1 und das Vergleichsbeispiel.

### Detaillierte Beschreibung der Zeichnungen

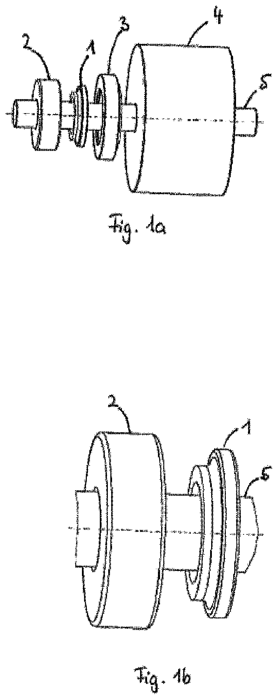

**Figur 1a und Figur 1b** zeigen in perspektivischer Darstellung (Explosionszeichnung) eine Lageranordnung gemäß Stand der Technik zur axialen Lagerung von Antriebswellen in magnetisch angetriebenen Pumpen. Der Gleitring (rotierender Ring) **1** wird über eine Elastomer-Aufnahme **3** kraftschlüssig mit dem Rotor **4** (Magnet) verbunden. Der Gegenring (statischer Ring) **2** ist statisch mit dem umgebenden Gehäuse verbunden (z.B. über eine Presspassung) und dient gleichzeitig zur radialen Lagerung der Welle **5.** Somit rotiert der Gleitring **1** mit der Wellendrehzahl gegen den Gegenring **2.**

Die Flächenpressung zwischen Gleit- und Gegenring resultiert aus dem axialen Schub des auf der Welle **5** angebrachten Pumpenlaufrades (Zentrifugal- oder Verdichterrad). Dieses Laufrad befindet sich außerhalb der Lageranordnung und ist nicht in Figur 1 mit abgebildet. Ein Reibmoment entsteht als Bremsdrehmoment am Gleitring und erhöht somit die notwendige Antriebsleistung.

Die Radiallagerung der Welle **5** führt ebenfalls zu einem Bremsdrehmoment, das jedoch aufgrund der vergleichsweise geringen Radialkräfte in rotierenden Pumpen gering ist.

**Figur 2a** **-** **Figur 2c** zeigen den Vergleich von hydrodynamischen Strukturen für die beschriebene Anwendung als Schnitt-Abwicklung des Gleitrings **1**. Mit dargestellt ist der ebene Gegenring **2.** Gemäß Stand der Technik wird diese Struktur beispielsweise als einfacher Keilspalt (Figur 2a) oder Keilspalt mit Rastfläche (Figur 2b) ausgeführt. Diese Konstruktionen sind in der gezeigten Ausführung nur in einer Rotationsrichtung tribologisch wirksam. Bei gegenläufigem Keilspalt sind diese Konstruktionen auch in beiden Rotationsrichtungen wirksam, allerdings auch bei etwa doppeltem Bauraumbedarf bzw. Umfangslänge der Lagerfläche.

Demgegenüber ist die erfindungsgemäße Strukturierung mit stufenförmigen Erhöhungen **6** (Figur 2c) sehr kompakt bei relativ hoher möglicher Kontaktfläche und bidirektionaler Rotation einsetzbar. Eine geringe Kontaktfläche kann den hydrodynamischen Effekt unterstützen. Andererseits bewirkt eine kleine Kontaktfläche auch eine hohe spezifische Flächenlast (Druck). Speziell bei Polymerwerkstoffen mit relativ geringen E-Modulen und Druckfestigkeiten wird bei kleinen Kontaktflächen deshalb die Druckbelastbarkeit stark eingeschränkt, so dass bei Anwendungen mit höherer Druckbelastbarkeit höhere Kontaktflächen sinnvoll und mit der erfindungsgemäßen Strukturierung mit stufenförmigen Erhöhungen auch möglich sind.

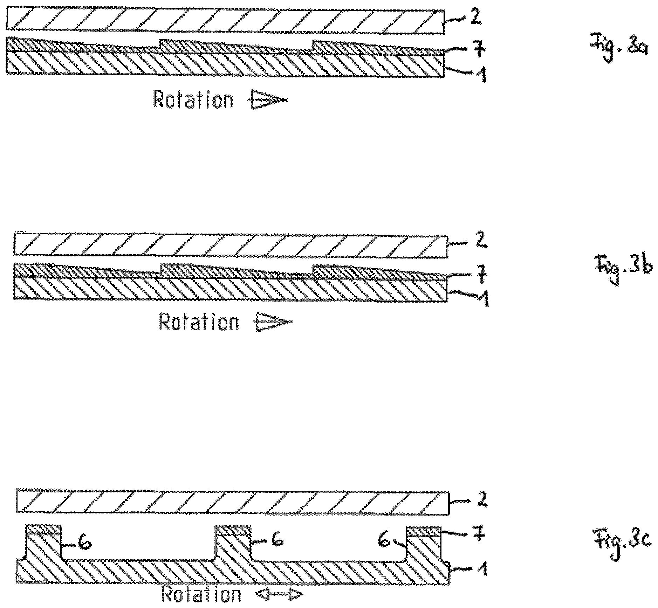

**Figur 3a** **-** **Figur 3c** zeigen als Schnitt-Abwicklung des Gleitrings **1** (mit dargestellt ist der ebene Gegenring **2**) den Effekt von Materialverschleiss von ca. 0,05 mm, wie er über die Lebensdauer von Pumpen abhängig von den Einsatzbedingungen bereits nach weniger als einem Betriebsjahr auftreten kann. Das Verschleissvolumen **7** ist jeweils fein schraffiert gekennzeichnet. Bei einem Verschleiss von 0,05 mm wird bei Figur 3a und Figur 3b gemäß Stand der Technik die hydrodynamische Struktur komplett abgeschliffen, was zur Folge hat, daß der reibwertreduzierende Effekt der hydrodynamischen Schmierung nicht mehr vorhanden ist. Somit ist diese Strukturierung speziell für Polymerlager weniger gut geeignet.

Dahingegen bleibt die erfindungsgemäße Struktur mit drei oder mehreren Erhöhungen (Figur 3c) auch bei höherem Verschleissvolumen erhalten und bleibt hydrodynamisch wirksam.

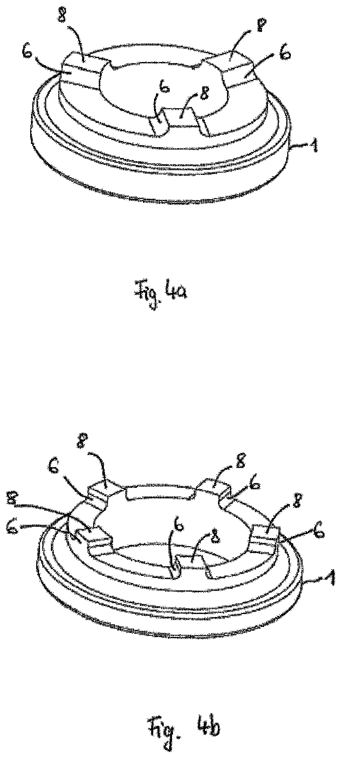

**Figur 4a und Figur 4b** zeigen in perspektivischer Darstellung die Anordnung der Erhöhungen **6** mit den Auflageflächen (Kontaktflächen) **8** auf dem Gleitring. Es können minimal 3 (Figur 4a) oder beliebig mehr Einzelkontaktflächen über den Umfang angebracht werden (5 Einzelkontaktflächen in Figur 4b). Bei gleicher Größe der Einzelauflageflächen kann durch Konstruktion mit mehr als 3 Kontaktflächen der axiale Druck auf eine größere Fläche verteilt und damit die spezifische Flächenpressung reduziert werden.

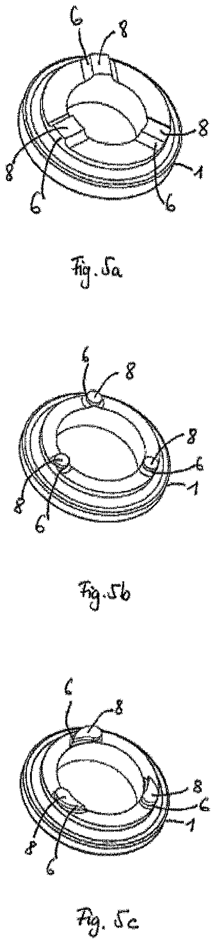

**Figur 5a** **-** **Figur 5c** zeigen in perspektivischer Darstellung beispielhaft verschiedene mögliche Formen der Erhöhungen **6** bzw. der Einzel-Auflageflächen (Kontaktflächen) **8.** Die Flächen können als Vieleck oder wie hier dargestellt als quasi rechteckförmiges Viereck (Figur 5a), rund (Figur 5b) oder z.B. als strömungsoptimierte asymmetrische oder unrunde Form (Figur 5c) dargestellt werden.

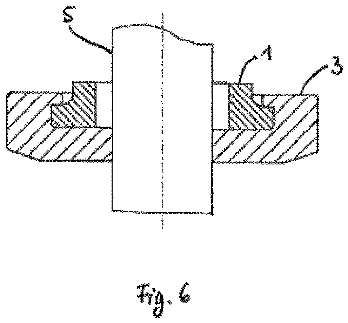

**Figur 6** zeigt in einer Schnittansicht die Lagerung des Gleitringes **1**, der wie im Stand der Technik üblich über eine Elastomer-Aufnahme **3** kraftschlüssig mit dem Rotor verbunden ist. Der Gleitring **1** selbst liegt nicht an der Welle **5** an und kann deshalb auch leicht abweichend vom rechten Winkel zur Welle positioniert werden. Durch die Elastomer-Aufnahme und die Winkeltoleranz wird der Gleitring **1** über den Umfang gleichmäßig gegen den Gegenring gedrückt. Dadurch werden Form-Lage-Toleranzen vorteilhaft ausgeglichen und ein stabiler hydrodynamischer Effekt begünstigt. Die elastische Lagerung ist auch wie in der Lager- und Dichtungstechnik üblich über federelastische Elemente möglich.

Figur 6 zeigt eine besonders vorteilhafte Ausführung, die eine einfache Vormontage und zuverlässige Positionierung erlaubt.

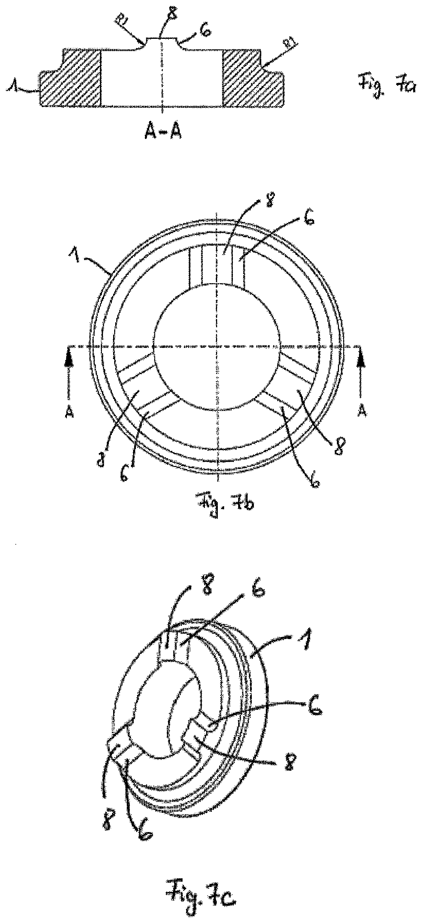

**Figur 7a** **-** **Figur 7c** zeigen eine bevorzugte Ausführungsform des Gleitringes **1** mit 3 quasi rechteckigen Auflageflächen (Kontaktflächen), die im Winkel von jeweils 120° zueinander angeordnet sind, in einer Schnittansicht (Figur 7a), einer Aufsicht (Figur 7b) sowie einer perspektivischen Darstellung (Figur 7c). Die Höhe der Erhöhungen **6** mit den Auflageflächen **8** kann beispielhaft zwischen 0,1 und 1 mm variiert werden, ohne den stabilen hydrodynamischen Lauf entscheidend negativ zu beeinflussen. Die Konstruktion ist sehr einfach und kostengünstig über Spritzgiessverfahren in Polymerwerkstoffen realisierbar. Die Einformung am Aussendurchmesser ist nicht funktionsrelevant, sie ist bedingt durch die Form der Elastomeraufnahme wie in Figur 6 dargestellt. Die Übergangsradien R1 vom Ring auf die Erhöhungen mit den Kontaktflächen sind formgebungsbedingt und ebenfalls nicht funktionsrelevant.

Das in Figur 7a - Figur 7c dargestellte Ausführungsbeispiel ist für eine axiale Last von 50 N geeignet.

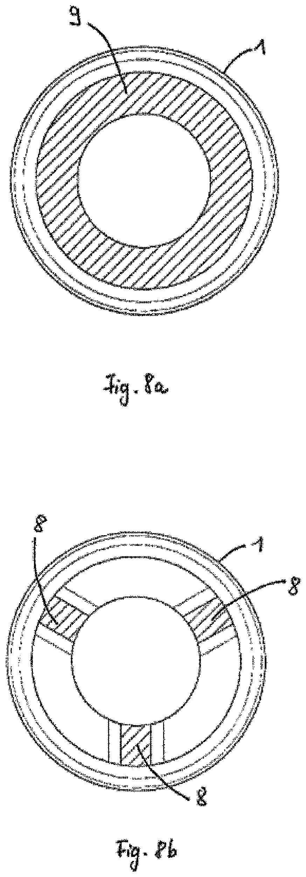

**Figur 8a und Figur 8b** zeigen die Aufsicht des Gleitrings von Figur 7a - Figur 7c, wobei hier in Figur 8a die in eine zur Kontaktfläche 8 parallele Ebene projizierte Lauffläche **9** und in Figur 8b die Kontaktfläche (Auflagefläche) **8** schraffiert dargestellt sind.

Die in den Figuren dargestellten Gleitringe haben am äußeren Umfang jeweils oben und unten eine Schutzfase (siehe insbesondere Figuren 4 und 7), die nicht zwingend erforderlich sind. Diese Schutzfasen sind durch einige zusätzliche Linien in den Darstellungen gezeigt.

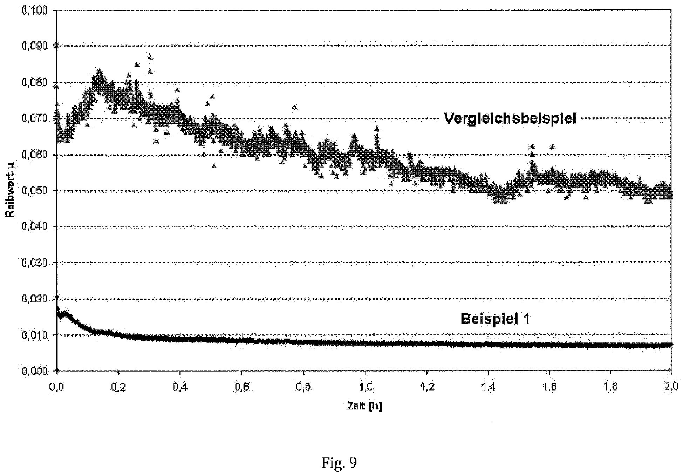

**Figur 9** zeigt den zeitlichen Verlauf der Reibwertmessung für das erfindungsgemäße Beispiel 1 und für das Vergleichsbeispiel.

### Detaillierte Beschreibung der Erfindung

Das erfindungsgemäße Axiallager umfasst einen Gleitring, einen Gegenring und eine elastische Lagerung des Gleitringes. Der Gleitring ist einteilig ausgeführt (sog. Einscheiben-Lager) und weist an seiner Lauffläche, d.h. an der Kontaktfläche mit dem Gegenring, eine Strukturierung auf, die den Aufbau eines stabilen hydrodynamischen Gleitfilmes ermöglicht. Die Strukturierung der Lauffläche erfolgt in der Weise, dass die Lauffläche drei oder mehrere, vorzugsweise drei, Erhöhungen aufweist, deren Kontaktfläche zum Gegenring eben ist.

Die Erhöhungen der Lauffläche sind vorzugsweise in Laufrichtung stufenförmig.

Vorzugsweise beträgt die gesamte Kontaktfläche der Erhöhungen höchstens 50%, bezogen auf die in eine zur Kontaktfläche parallelen Ebene projizierte Lauffläche des Gleitrings, d.h. auf die Gesamtfläche zwischen Innen- und Aussendurchmesser der Lagerfläche (Lauffläche) des Gleitrings (siehe Figur 8). Weiter vorzugsweise beträgt die gesamte Kontaktfläche der Erhöhungen der Lauffläche höchstens 30% und insbesondere bevorzugt höchstens 20% der projizierten Lauffläche.

Die gesamte Kontaktfläche des Gleitrings hat vorzugsweise einen Anteil von 5 - 30%, besonders bevorzugt von 10 - 20% an der projizierten Lauffläche.

Die Erhöhungen sind vorzugsweise über die Lauffläche gleichmäßig verteilt. Besonders bevorzugt ist es, dass drei Erhöhungen im Winkel von jeweils 120° zueinander angeordnet sind.

Die elastische Lagerung des Gleitrings kann beispielsweise über eine Elastomer-Aufnahme erfolgen, durch die der Gleitring kraftschlüssig mit dem Rotor verbunden wird. Die elastische Lagerung ist auch wie in der Lager- und Dichtungstechnik üblich über andere federelastische Elemente möglich.

Beim erfindungsgemäßen Axiallager wird vorzugsweise mindestens ein Lagerring der Gleitring/Gegenring-Paarung aus einem Polymerwerkstoff ausgeführt. Als Gleitring wird der mit der Welle rotierende Lagerring bezeichnet. Als Gegenring wird der mit der Welle fest verbundene stationäre Lagerring bezeichnet.

Vorzugweise wird der rotierende Gleitring aus dem Polymerwerkstoff ausgeführt.

Der stationäre Gegenring kann aus konventionellen Lagerwerkstoffen wie beispielsweise aus Sinterkeramik, Grafit, Hartmetall, Metall oder Bronze ausgeführt werden. Alternativ kann auch der Gegenring aus dem Polymerwerkstoff ausgeführt werden.

Die Lagerfläche des Gegenringes sollte vorzugsweise eine sehr hohe Oberflächenqualität, d.h. niedrige Rauhigkeitswerte aufweisen. Es konnte gezeigt werden, dass Reibungskoeffizient und Verschleiß durch die Verringerung der Rauhigkeitswerte am Gegenring deutlich reduziert werden können. Insbesondere bevorzugt weist der Gegenring eine polierte Oberfläche auf.

Es ist aber auch möglich, mit höheren Rauhigkeitswerten bei der Lauffläche des Gegenringes, etwa bei nur geläppten oder gehonten Oberflächen, Reibungskoeffizienten von unter 0,1 zu erhalten, bei gleichzeitig niedrigem Verschleiß, so dass auch erfindungsgemäße Axiallager mit höheren Rauhigkeitswerten bei der Lauffläche des Gegenrings stabil über längere Laufzeiten sind.

Die Oberfläche des Gegenrings hat vorzugsweise eine geringe Porosität, sowie eine hohe Härte und Wärmeleitfähigkeit. Die hohe Härte und Wärmeleitfähigkeit sind ausschlaggebend für den Verschleißwiderstand und die maximale Belastbarkeit der Lagerkonstruktion durch Druck und/oder Rotationsgeschwindigkeit. Dadurch wird der Aufbau des hydrodynamischen Gleitfilms ermöglicht und stabilisiert sowie die Reibwärmleistung gut abgeleitet.

In einer bevorzugten Ausführungsform des erfindungsgemäßen Axiallagers ist daher der Gegenring aus einer dichten und feinkörnigen Sinterkeramik, beispielsweise aus Aluminiumoxid. Besonders vorteilhaft ist die Ausführung aus gesintertem Siliziumcarbid (SSiC). Ein geeigneter Siliziumkarbid-Werkstoff ist unter der Bezeichnung EKasic^{®} F bei ESK Ceramics GmbH & Co. KG erhältlich, er weist eine Wärmeleitfähigkeit von > 120 W/m*K auf.

Die Lagerfläche des Gegenringes sollte vorzugsweise mit geringer Ebenheitsabweichung ausgeführt werden. Bei hoher Ebenheitsabweichung oder Nuten auf der Gegenlagerfläche kann der hydrodynamische Gleitfilm destabilisiert werden.

In einer weiteren möglichen Ausführungsform werden sowohl der Gleitring als auch der Gegenring aus einem Polymerwerkstoff ausgeführt. Dadurch können die Gesamtkosten für das Lagersystem noch weiter reduziert werden. Die erforderliche hohe Oberflächengüte am Gegenlager kann dabei vorteilhaft direkt durch thermoplastische Spritzgußverfahren erhalten werden. Dadurch können die bei Sinterwerkstoffen oder Metallen notwendigen teuren Prozessschritte wie Läppen und/oder Polieren entfallen, da im Polymer-Spritgussverfahren bereits in der Formgebung eine ausreichend hohe Oberflächenqualität erzielbar ist.

In einer ebenfalls möglichen Ausführungsform des erfindungsgemäßen Axiallagers kann der Gleitring in konventionellen Lagerwerkstoffen wie beispielsweise aus Sinterkeramik, Grafit, Hartmetall, Metall oder Bronze ausgeführt sein. Dies ist vorteilhaft für Anwendungsbedingungen, bei denen Polymerwerkstoffe aufgrund von stark abrasiven oder korrosiven Bedingungen nicht mehr einsetzbar sind.

In einer bevorzugten Ausführungsform weist der Gleitring des erfindungsgemäßen Axiallagers drei Erhöhungen auf (siehe Figur 7), die im Winkel von jeweils 120° zueinander angeordnet sind. Die drei Erhöhungen sind vorzugsweise in Laufrichtung stufenförmig. Die ebenen Auflageflächen haben eine "rechteckige" Form (siehe Figur 7). Durch diese Strukturierung des Gleitrings mit drei Auflageflächen am ebenen Gegenlager wird das Laufverhalten des erfindungsgemäßen Axiallagers auch unter hohen Form-Lage-Toleranzen der Gesamtkonstruktion stabilisert.

Die Höhe der Erhöhungen mit den Auflageflächen beträgt vorzugsweise zwischen 0,1 und 1 mm. Größere Höhen sind möglich, aber in der Regel nicht erforderlich.

Die hydrodynamische Strukturierung des Lagerrings kann bei Ausführung des Lagerrings in thermoplastischen Polymerwerkstoffen vorteilhaft ohne zusätzlichen Verfahrensschritt bei der thermoplastischen Formgebung über die entsprechende Spritzgußform eingebracht werden.

Es ist auch möglich, mehr als drei Auflageflächen zu verwirklichen. Dadurch wird der Druck auf die Auflageflächen proportional zur Gesamtfläche der Auflageflächen reduziert, was insbesondere bei hoher axialer Last vorteilhaft sein kann.

Die einzelnen Auflageflächen der drei oder mehreren Auflageflächen des Gleitrings können beliebig ausgeführt werden, beispielsweise als Vieleck-, Kreis- oder Unrund-Fläche (siehe Figur 5). Auch mit kreisrunden Kontaktflächen können sehr niedrige Reibkoeffizienten erhalten werden.

Die Abmessungen der Einzel-Auflageflächen ergeben sich aus den geometrischen Anforderungen der Lagergröße. Die Gesamtfläche als Summe der der Einzel-Auflageflächen wird vorteilhaft so ausgelegt, dass die Flächenpressung das Druckaufnahmevermögen des Lagerwerkstoffes nicht überschreitet.

Geeignete Polymerwerkstoffe für den Gleitring und/oder den Gegenring sind Polymere mit hoher chemischer und thermischer Beständigkeit unter den Einsatzbedingungen sowie einem hohen E-Modul zur Aufnahme der hohen Flächenpressungen bei geringer elastischer Verformung.

Beispiele für geeignete thermoplastische Werkstoffe für breite Anwendungsfelder in der Pumpentechnik sind Polyetherimid, Polyphenylensulfid und Polyetheretherketon, Flüssigkristallpolymer (engl. *liquid crystal polymer, LCP*), es können aber auch andere Polymerwerkstoffe eingesetzt werden.

Neben thermoplastischen Werkstoffen können beispielsweise auch Duroplaste wie beispielsweise Epoxidharze oder Sinterkunstsoffe wie PTFE oder Polyimid verwendet werden. Die Ausführung in Elastomeren wie beispielsweise Polyurethanen oder thermoplastischen Elastomeren (TPE) ist bei geringen mechanischen Belastungen ebenfalls möglich.

Vorzugsweise werden Polymerwerkstoffe mit Zusatz von Verstärkungsfasern wie beispielsweise Kohle- oder Aramidfasern eingesetzt. Diese auch als Polymermatrix-Verbundwerkstoffe bezeichneten Werkstoffe haben einen höheren E-Modul. Die elastische Verformung bei gegebenem Druck wird mit steigendem E-Modul verringert, wodurch sich das Druckaufnahmevermögen des daraus hergestellten Lagerringes und die Druckbelastbarkeit des Axiallagers erhöhen. Insbesondere bevorzugt werden Kohlefasern aufgrund der Unterstützung der Gleiteigenschaften und geringen Abrasivität am Gegenlager.

Der Gehalt und die Spezifikation der Faserfüllstoffe wird wie im Stand der Technik bekannt so variiert, dass die für die jeweilige Auslegung optimalen Steifigkeits- und Festigkeitswerte resultieren.

Der E-Modul, d.h. die Steifigkeit des für das erfindungsgemäße Axiallager eingesetzten Polymerwerkstoffs beträgt vorzugsweise wenigstens 7 GPa. Es konnte durch Versuche ermittelt werden, dass es mit derartigen Polymerwerkstoffen möglich ist, einen langzeitstabilen hydrodynamischen Gleitfilm aufzubauen.

Weiterhin ist es bevorzugt, Polymerwerkstoffe mit Hartstoffpartikeln wie beispielsweise Siliziumcarbid, Borcarbid, Aluminiumoxid und Siliziumdioxid zu verstärken. Dadurch kann die Oberflächenhärte des Polymerwerkstoffs soweit erhöht werden, dass auch unter hohem Kontaktdruck der hydrodynamische Gleitfilm ausreichend stabilisiert wird. Durch die Verstärkung mit diesen Partikeln wird auch die Verschleißbeständigkeit im Trockenlauf und beim Anlaufen des Lagers erhöht. Beim Anlaufen des Lagers tritt für kurze Zeit Mischreibung mit Kontakt der Gleitflächen auf, was bei unverstärkten Lagern zu hohem Verschleiß führen kann.

Die Verstärkung des Polymerwerkstoffs mit Hartstoffpartikeln kann anstelle der Verstärkung mit den Verstärkungsfasern oder bevorzugt in der Kombination mit diesen erfolgen.

Als Hartstoffpartikel zur Erhöhung des Verschleißwiderstandes des Polymerwerkstoffes werden vorzugsweise Siliziumcarbid-Partikel eingesetzt. SiC-Füllstoffe weisen eine Härte von > 9,5 Mohs auf und sind somit härter als alle in der Natur vorkommenden Abrasiv-Stoffe (mit Ausnahme von Diamant). Zudem weist SiC eine sehr gute Korrosionsstabilität in fast allen flüssigen Pumpmedien auf, die weit über der Stabilität der bekannten Polymermatrix-Werkstoffe liegt.

Ein weiterer Vorteil der Ausführung mit SiC-Füllstoffen ist die sehr hohe Wärmeleitfähigkeit des SiC von > 120 W/m*K, wodurch auch im Werkstoffverbund die entstehende Reibwärme effektiver abgeleitet werden kann.

Da grobkörnige keramische Füllstoffe eine hohen Abrasivität bei der Verarbeitung und im Tribokontakt mit dem Gegenring aufweisen, werden vorzugsweise Feinstkörnungen unter 1 µm (Submikronpartikel) eingesetzt, die bedingt durch die geringe Partikelgröße nicht mehr abrasiv wirken.

Der Gehalt an Hartstoffen kann über einen weiten Bereich bis zur Grenze der theoretischen Packungsdichte von Partikeln gewählt werden. Der sinnvoll nutzbare Bereich, der noch gute mechanische Eigenschaften des Polymerwerkstoffes erlaubt, liegt zwischen 1 - 30 Gew.-%.

Der Gehalt und die Spezifikation der Hartstoffe, sowie das Mischungsverhältnis zwischen Fasern und Hartstoffen wird wie im Stand der Technik bekannt so variiert, dass die für die jeweilige Auslegung optimalen Härte, Steifigkeits- und Festigkeitswerte resultieren. Der Gesamtgehalt an Fasern und Hartstoffen liegt vorzugsweise bei 1 - 40 Gew.-%, besonders bevorzugt bei 20 - 40 Gew.-%.

Als besonders vorteilhaft für das erfindungsgemäße Axiallager haben sich Polymerwerkstoffe mit Füllstoffkombinationen von Kohlefasern mit SiC-Submikronpartikeln gezeigt.

Der Verschleißwiderstand dieser Polymer/SiC/Kohlefaser-Werkstoffe (Polymermatrix-Werkstoffe mit eingelagerten Kohlefasern und SiC-Partikeln) in Kombination mit dem erfindungsgemäßen Axiallager mit Ausführung des Gegenringes in Keramikwerkstoffen wie Aluminiumoxid oder Siliziumkarbid liegt weit über denen von Grafitwerkstoffen.

Dies gilt auch unter ungünstigen Randbedingungen wie beispielsweise Abrasivbelastung. In Materialtests konnte auch die hohe Verschleissbeständigkeit dieser Werkstoffklasse ohne die Nutzung hydrodynamischer Effekte nachgewiesen werden.

Zur Optimierung der Gleiteigenschaften und mechanischen Eigenschaften können im Polymerwerkstoff zusätzlich Additive wie beispielsweise Gleitmittel, Öle, PTFE, Graphit und hexagonales Bornitrid eingesetzt werden.

Das erfindungsgemäße Axiallager kann eingesetzt werden in Heizwasserumwälzpumpen, Trinkwasserpumpen, Kühlwasserumwälzpumpen für Verbrennungsmotoren und Elektroantriebe, Verdichterpumpen für Kondensationskühlkreisläufe, Kühlwasserumwälzpumpen zur Kühlung von Schaltschränken, Hydraulikaggregaten und Lasergeräten.

Das erfindungsgemäße Axiallager kann auch für Anwendungen in korrosiven Medien wie Laugen und Säuren, Lösungsmitteln, Ölen und niedrigviskosen Fetten eingesetzt werden.

Des Weiteren ist das erfindungsgemäße Axiallager auch für die Axiallagerung in Elektromotoren, insbesondere in Kleinmotoren, geeignet, sofern eine Dauerschmierung mit Ölen, Fetten oder anderen Schmiermedien gewährleistet ist.

Weiterhin ist ein Einsatz des erfindungsgemäßen Axiallagers für sogenannte Anlauflager in Getrieben möglich. Der Belastungsfall ist ähnlich wie bei einem Pumpenlager, die Dauerschmierung mit Schmiermedien ist hier ebenfalls gewährleistet.

### Beispiele, Vergleichsbeispiel und Referenzbeispiel

### Beispiel 1

Eine Lagerkonstruktion wurde gemäß Figur 1 ausgeführt. Die geometrische Detailausführung des Gleitringes erfolgte gemäß Figur 7 mit drei in Laufrichtung stufenförmigen Erhöhungen. Der Radius am Übergang von der Erhöhung zur Grundfläche der Erhöhungen beträgt 1 mm, er ist aber für die hydrodynamische Auslegung des Lagers nicht relevant. Der Außendurchmesser des Gleitrings beträgt 21 mm, der Innendurchmesser 10,5 mm. Der Innendurchmesser der Gleitfläche beträgt ebenfalls 10,5 mm, der Außendurchmesser der Gleitfläche beträgt 17 mm. Die Höhe des Gleitrings außen beträgt 3 mm, die Höhe innen beträgt 5 mm. Die Gesamthöhe, d.h. die Höhe innen einschließlich der Erhöhungen mit den Auflageflächen, beträgt 6 mm und die Stufenhöhe (Höhe der Erhöhungen) beträgt 1 mm. Die Auflageflächen weisen eine rechteckähnliche Form auf (siehe Figur 7). Die Stufenbreite (Breite der Erhöhungen) beträgt 3,25 mm, die Stufenlänge (Länge der Erhöhungen in Laufrichtung) 2,5 mm. Der Flächenanteil der stufenförmigen Erhöhungen an der projizierten Lauf- bzw. Gleitfläche, d.h. an der Fläche zwischen Aussen- und Innendurchmesser der Gleitfläche, beträgt 17%.

Die Ausführung des Gegenringes erfolgte als Al₂O₃-Sinterwerkstoff mit polierter Oberfläche.

Die Ausführung des Gleitringes erfolgte aus dem Polymerwerkstoff Polyphenylensulfid (PPS) mit den Verstärkungsstoffen Kohlefasern und SiC-Feinstpartikeln mit einer Partikelgröße < 1 µm mit einem Gesamtgehalt von 35 Gew.-%.

Die Reibungskoeffizienten werden auf einem speziell dafür angefertigten Prüfstand in der Anordnung gemäß Figur 1 über das Schleppmoment ermittelt.

Die Prüfanordnung entspricht der Ring-auf-Ring-Anordnung.

Das Medium wurde über Thermostat konstant temperiert. Die Reibmomentaufnahme erfolgte über eine Präzisionskraftmesszelle, die Wegaufnahme des linearen Verschleißweges über einen mechanischen Wegaufnehmer. Alle Messwerte wurden zeitaufgelöst aufgenommen. Die Messwerte werden ab Start des Motorantriebes protokolliert.

Der Reibungskoeffizient wurde nach einem Einlauf von einer Stunde als Mittelwert über eine Stunde ermittelt. Dieser Reibungskoeffizient stellt den Systemreibwert der Gleitring/Gegenring-Paarung dar.

Der Verschleiß wurde als linearer Verschleißweg pro Zeit aus der Steigung der Kurve Weg/Zeit nach Einlauf und thermischem Ausgleich nach 1 h ermittelt.

Die pv-Werte wurden konstant auf p = 0,5 MPa und v = 1,9 m/s eingestellt.

Um die sehr geringen Reibmomente (bis 0,002) genau auflösen zu können, wurde die Antriebsseite mit Luftlagern gelagert. Da die Auflage über Gewichtskraft erfolgte, konnte zudem eine axiale Lagerung entfallen, d. h. es war nur eine radiale Lagerung mit Luftlager erforderlich.

Die spezifischen Belastungen des Lagers lagen bei einer Drehzahl von 3000 U/min und einem axialen Schub von 50 N. Als Medium wurde Wasser (50 °C) verwendet. Alternativ können auch Wasser/Glykol-Mischungen bis zu einem Glykol-Gehalt von 50 Vol.-% verwendet werden.

Mit dieser Lagerkonstruktion und Werkstoffkombination wurden äußerst niedrige System-Reibungskoeffizienten bei den oben angegebenen System-Randbedingungen von 0,004 mit einer Standardabweichung von 0,001 gemessen.

Dieser niedrige Reibungskoeffizient wurde bereits nach einer sehr kurzen Einlaufzeit von nur 10 Minuten erreicht und blieb im Versuch über die gesamte Messzeit von 168 Stunden stabil (siehe Figur 9, hier nur Laufzeit von 2 Stunden dargestellt).

### Beispiel 2

Beispiel 1 wurde wiederholt, jedoch wurde der Gegenring als Al₂O₃-Sinterwerkstoff mit geläppter Oberfläche (Rₐ = 0,4 µm) ausgeführt. Die Versuchsergebnisse sind in Tabelle 1 dargestellt.

### Beispiel 3

Beispiel 1 wurde wiederholt, jedoch wurde der Gegenring als Al₂O₃-Sinterwerkstoff mit feingehonter Oberfläche ausgeführt. Die Versuchsergebnisse sind in Tabelle 1 dargestellt.

### Beispiel 4

Beispiel 1 wurde wiederholt, jedoch erfolgte die Ausführung des Gegenringes als SiC-Sinterwerkstoff (EKasic^{®} F der Firma ESK Ceramics GmbH & Co. KG) mit polierter Oberfläche. Die Versuchsergebnisse sind in Tabelle 1 dargestellt.

### Beispiele 5 bis 7

Beispiel 1 wurde wiederholt, jedoch betrug die Höhe der Erhöhungen mit den Auflageflächen nicht 1 mm wie in Beispiel 1, sondern wurde gemäß Tabelle 2 variiert,
Die ermittelten System-Reibungskoeffizienten sind in Tabelle 2 aufgeführt.

### Beispiele 8 bis 10

Beispiel 1 wurde wiederholt, jedoch wurde die Form der drei Auflageflächen variiert. Bei einer Stufenbreite von jeweils 3,25 mm (entsprechend der Gleitflächenbreite) wurde anstelle der Stufenlänge von 2,5 mm in Beispiel 1 eine Stufenlänge in Umfangsrichtung von 1,5 mm und 5 mm realisiert (Beispiele 12 und 13), so dass die Auflageflächen wie in Beispiel 1 eine rechteckähnliche Form aufwiesen. Weiterhin wurde ein Gleitring mit drei runden Auflageflächen mit einem Durchmesser von jeweils 2,5 mm getestet (Beispiel 14). Die Stufenhöhe betrug wie in Beispiel 1 jeweils 1 mm.

Die ermittelten Reibungskoeffizienten finden sich in Tabelle 3.

### Beispiele 11 bis 14

Beispiel 1 wurde wiederholt, jedoch wurde als Polymerwerkstoff für den Gleitring Polyetherimid eingesetzt, das durch SiC-Füllstoffe mit einem Gehalt von bis zu 20 Gew.-% verstärkt wurde, ohne Zusatz von Kohlefasern. Es wurde derselbe SiC-Füllstoff wie in Beispiel 1 verwendet. Die tribologischen Kenndaten sind hier vor allem in Bezug auf den Reibungskoeffizient gegenüber Beispiel 1 etwas schlechter zu bewerten, liegen aber dennoch niedriger als beispielsweise bei Grafitwerkstoffen. Die Ergebnisse bezüglich linearem Verschleiß und Reibungskoeffizient sind in Tabelle 4 dargestellt.

Tabelle 4 zeigt sehr deutlich wie der Verschleißwiderstand eines Polymerwerkstoffes im erfindungsgemäßen Axiallager durch die Verstärkung mit SiC-Füllstoffen erhöht werden kann.

### Beispiel 15

Beispiel 1 wurde wiederholt, jedoch wurde der Gleitring aus LCP (liquid crystal polymer) ohne Verstärkung durch Kohlefasern aber mit Graphit als Triboadditiv ausgeführt. Der ermittelte Reibungskoeffizient liegt bei 0,01 und der lineare Verschleiß bei 1,3 µm/h.

### Vergleichsbeispiel

Ein Axiallager wurde gemäß Figur 1 ausgeführt. Die geometrische Detailausführung des Gleitringes erfolgte gemäß Figur 1 als ebener Einscheiben-Gleitring mit einer Schmiernut. Als Werkstoff für den Gleitring wurde Grafit eingesetzt.

Die Ausführung des Gegenringes erfolgte als Al₂O₃-Sinterwerkstoff mit polierter Oberfläche.

Die Ermittlung des Reibungskoeffizienten erfolgte wie in Beispiel 1.
Die spezifischen Belastungen des Lagers lagen auch hier bei einer Drehzahl von 3000 U/min und einem axialen Schub von 50 N. Als Medium wurde wieder Wasser (50 °C) verwendet.

Der in diesem Versuch nach einer Stunde ermittelte mittlere Reibungskoeffizient beträgt 0,05.

Dieser Reibwert konnte erst nach einer längeren Einlaufzeit von einer Stunde erreicht werden (siehe Figur 9).

### Referenzbeispiel

Beispiel 1 wurde wiederholt, jedoch wurde als Polymerwerkstoff für den Gleitring Polyetherimid eingesetzt ohne Zusatz von SiC-Füllstoffen und ohne Zusatz von Kohlefasern. Die tribologischen Kenndaten sind in Tabelle 4 aufgeführt. Der Reibungskoeffizient ist höher als bei den Beispielen 2 bis 5, der lineare Verschleiß ist sehr hoch.

**Tabelle 1:**

| | Gegenring Oberfläche | Linearer Verschleiss [µm/h] | Reibungskoeffizient µ |
|---|---|---|---|
| Beispiel 2 | Aluminiumoxid geläppt | 20 | 0,087 |
| Beispiel 3 | Aluminiumoxid feingehont | 6,4 | 0,060 |
| Beispiel 1 | Aluminiumoxid feinpoliert | 0 | 0,004 |
| Beispiel 4 | SiC (EKasic^{®} F) feinpoliert | 0 | 0,003 |

**Tabelle 2:**

| | Stufenhöhe [mm] | Reibungskoeffizient µ |
|---|---|---|
| Beispiel 1 | 1 | 0,004 |
| Beispiel 5 | 0,5 | 0,006 |
| Beispiel 6 | 0,25 | 0,008 |
| Beispiel 7 | 0,1 | 0,009 |

**Tabelle 3:**

| | Kontaktfläche | Reibungskoeffizient µ |
|---|---|---|
| Beispiel 8 | Rechteck Stufenlänge 1,5 mm | 0,008 |
| Beispiel 1 | Rechteck Stufenlänge 2,5 mm | 0,004 |
| Beispiel 9 | Rechteck Stufenlänge 5 mm | 0,007 |
| Beispiel 10 | Rund Durchmesser 2,5 mm | 0,004 |

**Tabelle 4:**

| | SiC-Gehalt [Gew.-%] | Linearer Verschleiss [µm/h] | Reibungskoeffizient µ |
|---|---|---|---|
| Referenzbeispiel | 0 | 1469 | 0,080 |
| Beispiel 11 | 5 | 4,5 | 0,014 |
| Beispiel 12 | 10 | 3,8 | 0,020 |
| Beispiel 13 | 15 | 0,9 | 0,014 |
| Beispiel 14 | 20 | 0 | 0,016 |

## Patentansprüche

1. Axiallager, umfassend einen Gleitring (1), einen Gegenring (2) und eine elastische Lagerung (3) des Gleitringes, wobei der Gleitring (1) einteilig ist und an seiner Lauffläche eine Strukturierung aufweist, die den Aufbau eines stabilen hydrodynamischen Gleitfilmes ermöglicht, **dadurch gekennzeichnet, dass** die Strukturierung der Lauffläche in der Weise erfolgt, dass die Lauffläche drei oder mehrere Erhöhungen (6) aufweist, deren Kontaktfläche (8) zum Gegenring (2) eben ist, wobei die gesamte Kontaktfläche (8) der Erhöhungen (6) der Lauffläche höchstens 50%, vorzugsweise höchstens 30% und insbesondere bevorzugt höchstens 20% der in eine zur Kontaktfläche parallelen Ebene projizierten Lauffläche (9) beträgt, und wobei mindestens ein Lagerring der Gleitring/Gegenring-Paarung aus einem Polymerwerkstoff ausgeführt ist, und wobei der Polymerwerkstoff zusätzliche Hartstoffpartikel umfasst, und wobei der Gehalt an Hartstoffen zwischen 1 - 30 Gew.-% beträgt.

2. Axiallager gemäß Anspruch 1, wobei die Erhöhungen (6) der Lauffläche in Laufrichtung stufenförmig sind.

3. Axiallager gemäß einem der Ansprüche 1 oder 2, wobei die gesamte Kontaktfläche (8) der Erhöhungen (6) der Lauffläche 5 - 30%, vorzugsweise 10 - 20% der projizierten Lauffläche (9) beträgt.

4. Axiallager gemäß einem der Ansprüche 1 bis 3, wobei die Erhöhungen (6) über die Lauffläche gleichmäßig verteilt sind.

5. Axiallager gemäß einem der Ansprüche 1 bis 4, wobei drei Erhöhungen (6) im Winkel von jeweils 120° zueinander angeordnet sind.

6. Axiallager gemäß einem der Ansprüche 1 bis 5, wobei die Höhe der Erhöhungen (6) zwischen 0,1 und 1 mm beträgt.

7. Axiallager gemäß Anspruch 1, wobei der Gleitring (1) aus dem Polymerwerkstoff ausgeführt ist.

8. Axiallager gemäß Anspruch 1, wobei sowohl der Gleitring (1) als auch der Gegenring (2) aus einem Polymerwerkstoff ausgeführt sind.

9. Axiallager gemäß einem der Ansprüche 1 bis 8, wobei der Polymerwerkstoff ausgewählt ist aus der Gruppe bestehend aus thermoplastischen Werkstoffen, duroplastischen Werkstoffen und Elastomeren.

10. Axiallager gemäß einem der Ansprüche 1 bis 9, wobei der Polymerwerkstoff ausgewählt ist aus der Gruppe bestehend aus Epoxidharzen, PTFE, Polyimid, Polyurethanen, thermoplastischen Elastomeren (TPE), Polyetherimid, Polyphenylensulfid, Polyetheretherketon und Flüssigkristallpolymeren.

11. Axiallager gemäß einem der Ansprüche 1 bis 10, wobei der E-Modul des Polymerwerkstoffs wenigstens 7 GPa beträgt.

12. Axiallager gemäß einem der Ansprüche 1 bis 11, wobei der Polymerwerkstoff zusätzliche Verstärkungsfasern umfasst, vorzugsweise Kohle- oder Aramidfasern.

13. Axiallager gemäß einem der Ansprüche 1 bis 12, wobei der Polymerwerkstoff Siliziumcarbid-, Borcarbid-, Aluminiumoxid- und/oder Siliziumdioxid-Partikel umfasst, besonders bevorzugt Siliziumcarbid-Partikel.

14. Axiallager gemäß einem der Ansprüche 12 bis 13, wobei der Gesamtgehalt an Fasern und Hartstoffen 1 - 40 Gew.-%, besonders bevorzugt 20 - 40 Gew.-% beträgt.

15. Axiallager gemäß einem der Ansprüche 1 bis 14, wobei die Lagerfläche des Gegenringes (2) poliert ist.

16. Axiallager gemäß einem der Ansprüche 1 bis 15, wobei der Gegenring (2) aus einer dichten und feinkörnigen Sinterkeramik ausgeführt ist, vorzugsweise aus Aluminiumoxid oder aus gesintertem Siliziumcarbid (SSiC).

17. Axiallager gemäß einem der Ansprüche 1 bis 16, wobei der Gleitring (1) aus Sinterkeramik, Grafit, Hartmetall, Metall oder Bronze ausgeführt ist.

## Claims

1. An axial bearing, comprising a slide ring (1), a counter ring (2), and an elastic bearing (3) of the slide ring, wherein the slide ring (1) is one-piece and has a structure on its running surface that allows for the formation of a stable hydrodynamic lubricating film, **characterized in that** the structuring of the running surface takes place such that the running surface has three or more elevations (6), the contact surface (8) of which is flat toward the counter ring (2), wherein the entire contact surface (8) of the elevations (6) of the running surface is at most 50%, preferably at most 30%, and particularly preferably at most 20% of the running surface (9) projected into a plane parallel to the contact surface, and wherein at least one bearing ring of the slide ring / counter ring pairing is made from a polymer material, and wherein the polymer material comprises additional hard material particles, and wherein the hard material content is between 1 - 30 wt. %.

2. The axial bearing according to claim 1, wherein the elevations (6) of the running surface are step-shaped in the running direction.

3. The axial bearing according to one of claims 1 or 2, wherein the entire contact surface (8) of the elevations (6) of the running surface is 5 - 30%, preferably 10 - 20%, of the projected running surface (9).

4. The axial bearing according to one of claims 1 to 3, wherein the elevations (6) are evenly distributed over the running surface.

5. The axial bearing according to one of claims 1 to 4, wherein three elevations (6) are each arranged at an angle of 120° to one another.

6. The axial bearing according to one of claims 1 to 5, wherein the height of the elevations (6) is between 0.1 and 1 mm.

7. The axial bearing according to claim 1, wherein the slide ring (1) is made from the polymer material.

8. The axial bearing according to claim 1, wherein both the slide ring (1) and the counter ring (2) are made from a polymer material.

9. The axial bearing according to one of claims 1 to 8, wherein the polymer material is selected from the group consisting of thermoplastic materials, thermosetting plastic materials, and elastomers.

10. The axial bearing according to one of claims 1 to 9, wherein the polymer material is selected from the group consisting of epoxy resins, PTFE, polyimide, polyurethanes, thermoplastic elastomers (TPE), polyetherimide, polyphenylene sulfide, polyetheretherketone, and liquid crystal polymers.

11. The axial bearing according to one of claims 1 to 10, wherein the modulus of elasticity of the polymer material is at least 7 GPa.

12. The axial bearing according to one of claims 1 to 11, wherein the polymer material comprises additional reinforcing fibers, preferably carbon fibers or aramide fibers.

13. The axial bearing according to one of claims 1 to 12, wherein the polymer material comprises silicon carbide, boron carbide, aluminum oxide, and/or silicon dioxide particles, particularly preferably silicon carbide particles.

14. The axial bearing according to one of claims 12 to 13, wherein the total content of fibers and hard materials is 1 - 40 wt. %, particularly preferably 20 - 40 wt. %.

15. The axial bearing according to one of claims 1 to 14, wherein the bearing surface of the counter ring (2) is polished.

16. The axial bearing according to one of claims 1 to 15, wherein the counter ring (2) is made from a dense and fine-grained sintered ceramic, preferably from aluminum oxide or from sintered silicon carbide (SSiC).

17. The axial bearing according to one of claims 1 to 16, wherein the slide ring (1) is made from sintered ceramic, graphite, carbide, metal, or bronze.

## Revendications

1. Palier axial, comprenant une bague de glissement (1), une bague complémentaire (2) et un logement élastique (3) de la bague de glissement, dans lequel la bague de glissement (1) ne forme qu'une partie et comprend sur sa surface de glissement une structuration permettant l'élaboration d'un film de glissement hydrodynamique stable, **caractérisé en ce que** la structuration de la surface de glissement s'effectue de telle sorte que la surface de glissement présente trois surélévations (6) ou plus, dont la surface de contact (8) vis-à-vis de la bague complémentaire (2) est plane, dans lequel l'ensemble de la surface de contact (8) des surélévations (6) de la surface de glissement constitue au plus 50 %, de préférence au plus 30 % et particulièrement préférablement au plus 20 % de la surface de glissement (9) projetée dans un plan parallèle à la surface de contact et dans lequel au moins une bague de palier de la paire bague de glissement/bague complémentaire est réalisée en matériau polymère et dans lequel le matériau polymère comprend en outre des particules de matériau dur et dans lequel la teneur en matériau dur est comprise entre 1 et 30 % en poids.

2. Palier axial selon la revendication 1, dans lequel les surélévations (6) de la surface de glissement sont étagées dans la direction de glissement.

3. Palier axial selon l'une des revendications 1 ou 2, dans lequel l'ensemble de la surface de contact (8) des surélévations (6) de la surface de glissement constituent de 5 à 30 %, de préférence de 10 à 20 % de la surface de glissement projetée (9).

4. Palier axial selon l'une des revendications 1 à 3, dans lequel les surélévations (6) sont réparties uniformément sur la surface de glissement.

5. Palier axial selon l'une des revendications 1 à 4, dans lequel les surélévations (6) sont agencées les unes par rapport aux autres selon un angle respectif de 120°.

6. Palier axial selon l'une des revendications 1 à 5, dans lequel la hauteur des surélévations (6) va de 0,1 à 1 mm.

7. Palier axial selon la revendication 1, dans lequel la bague de glissement (1) est réalisée en matériau polymère.

8. Palier axial selon la revendication 1, dans lequel aussi bien la bague de glissement (1) que la bague complémentaire (2) sont réalisées en un matériau polymère.

9. Palier axial selon l'une des revendications 1 à 8, dans lequel le matériau polymère est choisi parmi le groupe constitué de matériaux thermoplastiques, matériaux thermodurcissables et élastomères.

10. Palier axial selon l'une des revendications 1 à 9, dans lequel le matériau polymère est choisi parmi le groupe constitué de résines époxydes, PTFE, polyimide, polyuréthannes, élastomères thermoplastiques (TPE), polyétherimide, polysulfure de phénylène, polyétheréthercétone et polymères à cristaux liquides.

11. Palier axial selon l'une des revendications 1 à 10, dans lequel le module d'élasticité du matériau polymère est d'au moins 7 GPa.

12. Palier axial selon l'une des revendications 1 à 11, dans lequel le matériau polymère comprend des fibres de renforcement supplémentaires, de préférence des fibres d'aramide ou de carbone.

13. Palier axial selon l'une des revendications 1 à 12, dans lequel le matériau polymère comprend des particules de carbure de silicium, de carbure de bore, oxyde d'aluminium et/ou de dioxyde de silicium, de manière particulièrement préférée des particules de carbure de silicium.

14. Palier axial selon l'une des revendications 12 à 13, dans lequel la teneur totale en fibres et matériaux durs est de 1 à 40 % en poids, de manière particulièrement préférée de 20 à 40 % en poids.

15. Palier axial selon l'une des revendications 1 à 14, dans lequel la surface de palier de la bague complémentaire (2) est polie.

16. Palier axial selon l'une des revendications 1 à 15, dans lequel la bague complémentaire (2) est réalisée en une céramique frittée dense et à grains fins, de préférence en oxyde d'aluminium ou en carbure de silicium fritté (SSiC).

17. Palier axial selon l'une des revendications 1 à 16, dans lequel la bague de glissement (1) est réalisée en céramique frittée, graphite, métal dur, métal ou bronze.
